# EUROPEAN PATENT SPECIFICATION

(11) **EP 4 090 906 B1**
(45) Date of publication and mention of the grant of the patent: **23.07.2025**
(21) Application number: 21700211.2
(22) Date of filing: 13.01.2021
(51) Int. Cl.: F41H 1/02

(54) **ANTI-BALLISTIC PLATE ASSEMBLY**
ANTIBALLISTISCHE PLATTENANORDNUNG
ENSEMBLE PLAQUE ANTI-BALISTIQUE

(30) Priority: 15.01.2020 NO 20200047
(43) Date of publication of application: 23.11.2022
(73) Proprietor: NFM AS, 1400 Ski (NO)
(72) Inventor: AHLBERG, Jan Örjan, 169 40 Solna (SE)
(74) Representative: Bryn Aarflot AS
(86) International application number: PCT/EP2021/050501
(87) International publication number: WO 2021/144275

(56) References cited:
- EP-B1- 2 291 603
- DE-U1- 202017 101 793
- GB-A- 116 362
- US-A1- 2019 041 167

## Description

### Technical Field

The present invention relates to an anti-ballistic plate assembly configured to be worn by a person to provide anti-ballistic protection of a person's chest portion.

### Background Art

Damage caused by ballistic projectiles to structures within the thorax and abdomen remain the leading cause of death on the battlefield. Ballistic protection in the form of rigid composite plates constructed from a ceramic strike face with a backing of high tenacity fibers is currently the most effective form of protection for the essential anatomical structures, i.e. the heart, the great vessels, the liver and the spleen.

Ballistic protection plates can be constructed in order to function as stand alone (SA), i.e. without additional protection elements in order to obtain the required performance, or in conjunction with (ICW), i.e. in combination with a second protection element providing additional reduction of energy during impact. This second element is generally constructed from a softer composition of high tenacity fibers that covers the desirable anatomical structures, such as lungs, kidneys, intestines and spinal cord and may also be used to protect other parts of the body such as the extremities.

Due to the increasing amount of equipment and consequently weight a soldier is required to carry, the physical and cognitive performance of the soldier is reduced. In addition to the weight, the wearing of protection plates covering the torso leads to reduced thermoregulation. This has led to a demand for lighter protection equipment with less surface covered, essentially leaving only the essential anatomical structures covered by SA ballistic protection plates. These plates are generally carried in a textile cover often referred to as a plate carrier (PC).

The anti-ballistic plates are generally produced in a shape and curvature which admits a proper fit for a generic male chest front. Due to their shape and rigidity they are however ill-fitting for the back.

Existing plate carriers, or anti-ballistic plate assemblies, do not take into account the incompatibility of the plate shape for the back-body shape. Attaching the plate carrier strap (shoulder strap) on the outer face of the plate or at the upper, outer edge portion of the plate, results in a pull of the upper part of the plate towards the body. This creates pressure points at the shoulder blade and the upper part of the chest. It also creates increased pressure at the shoulders due to the reduced contact surface between the carrier straps and the body / shoulders.

Publication US20120132065 discloses a plate carrier carrying a ballistic plate. Further anti-ballistic plate assemblies are known from EP2291603B1, US2019/0041167A1 and GB116362A.

### Summary of invention

According to the present invention, there is provided an anti-ballistic plate assembly as defined in independent claim 1, the assembly comprising an anti-ballistic front plate configured to protect the front of a chest of the person and having an inner face and an outer face, and an anti-ballistic back plate configured to protect the back of a person and having an inner face and an outer face. The assembly further comprises two carrying straps configured to extend over a shoulder of the person, on respective side of the person's neck. The carrying straps are attached to the front plate and the back plate, at respective attachment areas. The attachment areas are located at the respective inner face. The anti-ballistic front plate and the anti-ballistic back plate, each have an upper and inner edge portion. According to the invention, the attachment area of the front plate and the back plate, respectively, is arranged a respectively first and second vertical distance below the respective upper and inner edge portion.

It shall be appreciated that the carrying straps may in some embodiments be attached directly to the anti-ballistic plates. However, as is common in the art, the carrying straps can connect to a plate carrier (PC) as referred to above, or other type of plate-carrying means.

While common worn anti-ballistic plates have a substantially straight upper and inner edge portion, other designs may be possible. For instance, the upper and inner edge portion may have a curved shape. The said vertical distance would in such embodiments be measured between the uppermost vertical position along such a curved edge portion and the uppermost location of the attachment area.

According to the invention, the first vertical distance is smaller than the second vertical distance. This applies in particular to embodiments wherein the front plate and the back plate are of identical shape. In such embodiment, having the said difference between the first and second vertical distances contributes in adapting the plates to the different body shape at the front chest and the back of a carrying person.

In preferred embodiments the first vertical distance is between 20 and 50 mm, more preferably between 25 and 35 mm, or between 25 and 30 mm.

Furthermore, advantageously the second vertical distance can be between 30 and 80 mm, more preferably between 40 and 70 mm, or between 55 and 60 mm.

The front plate and/or the back plate can have a width between 200 and 300 mm, and a height between 250 and 350 mm.

### Detailed description of the invention

While various features of the invention have been discussed in general terms above, a non-limiting example of embodiment will be presented in the following with reference to the drawings, in which
- Fig. 1: is a principle front view of a person and an anti-ballistic plate protecting a portion of the person's chest;
- Fig. 2: is a schematic side view of an anti-ballistic front plate and a back plate carried by a person using an anti-ballistic plate assembly according to prior art;
- Fig. 3: is an enlarged portion of Fig. 2, illustrating some disadvantages of the prior art solutions;
- Fig. 4: is a side view corresponding to Fig. 2, however of an anti-ballistic plate assembly according to the invention;
- Fig. 5: is an enlarged portion of Fig. 4, illustrating advantages of the present invention;
- Fig. 6: is a schematic side view of the assembly according to the invention;
- Fig. 6a: is an enlarged portion of Fig. 6;
- Fig. 7: is a schematic back view of an anti-ballistic front plate carried by two carrying straps, illustrating two attachment areas where the carrying straps are connected to the front plate;
- Fig. 8: is a schematic back view of an anti-ballistic back plate carried by two carrying straps;
- Fig. 9: is a perspective view of a portion of an anti-ballistic plate assembly according to the invention, when mounted on a person; and
- Fig. 10: is a perspective principle view showing a front plate and in front of the chest of a carrying person.

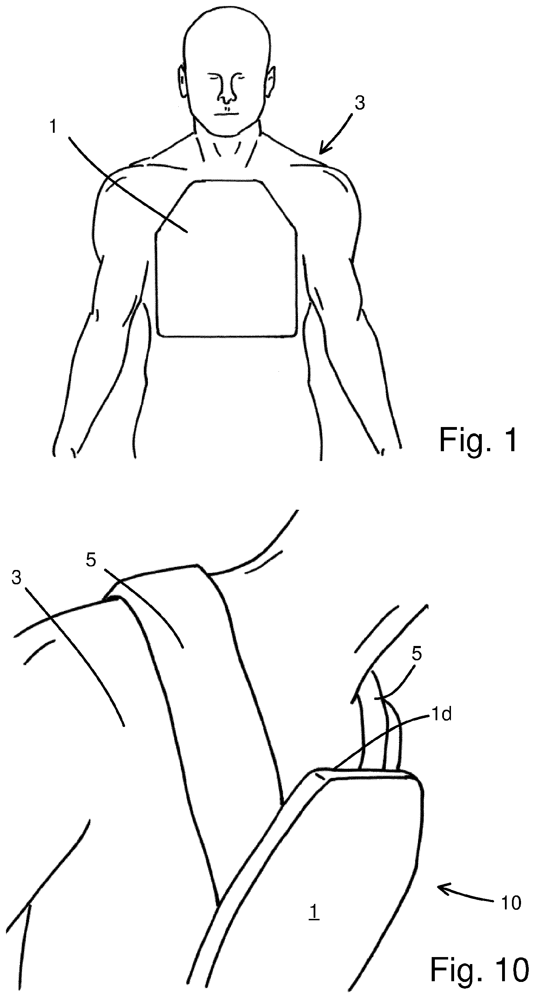

Fig. 1 depicts an anti-ballistic plate 1 arranged in front of the thorax or chest portion 3 of a person. The anti-ballistic plate 1 or protection plate is typically made of a stiff composite material and is configured to protect the person from projectiles such as a bullet or high speed fragments.

Typically, the anti-ballistic plate 1 is enclosed in a fabric or other type of sheet and is worn by the person by means of a strap arrangement, which is not shown in Fig. 1.

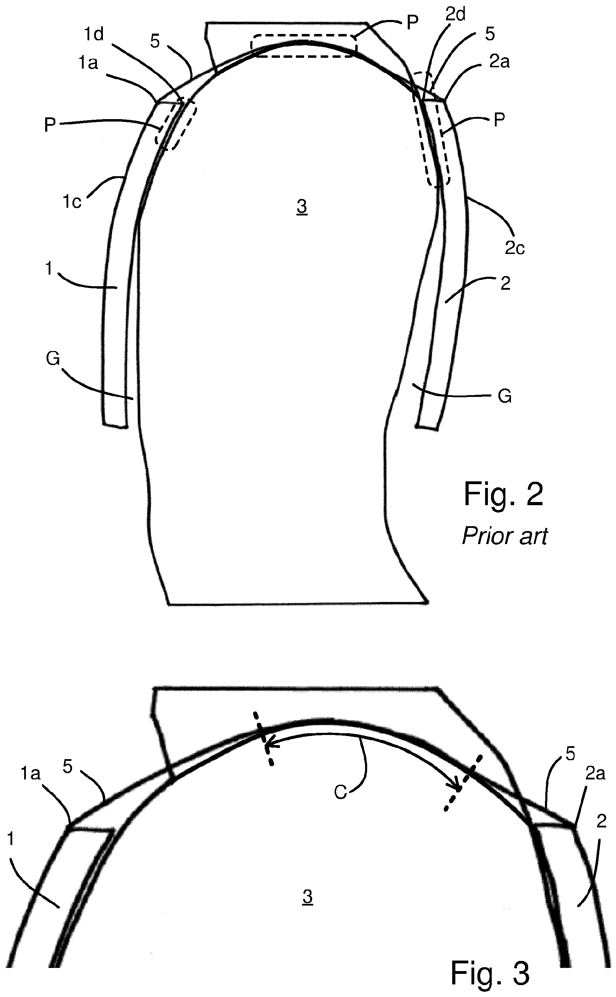

Fig. 2 shows a schematic side view of a chest portion 3 of a person wearing an anti-ballistic plate assembly 10 according to prior art. The anti-ballistic plate assembly comprises an anti-ballistic front plate 1 arranged at the front chest portion and an anti-ballistic back plate 2 at the back portion. Extending between the two plates 1, 2 is a carrying strap 5. As shown in Fig. 2, the carrying strap 5 extends from an upper and outer edge portion 1a of the front plate 1 and the upper and outer edge portion 2a of the back plate 2.

Fig. 3 depicts the upper, enlarged portion of Fig. 2. As indicated with the curved arrow C, the contact length of the carrying strap 5 against the shoulder of the person 3, is relatively short.

In Fig. 2 three pressure points P are indicated with dashed lines. In the pressure points P, the person wearing the anti-ballistic assembly may experience uncomfortable pressure against the body. As shown with Fig. 3, one of these pressure points P is at the shoulder, where only a small surface of the shoulder is used to carry the plates 1, 2. Furthermore, since the carrying strap 5 is attached on the outer faces 1c, 2c of the plates 1, 2, an increased pressure against the body may result at the upper, inner portions of the plates, as illustrated with the remaining two pressure points P. The pressure against the body 3 at these two pressure points may further be increased, because when attaching the carrying straps 5 to the outer faces 1c, 2c of the plates 1, 2, a gap G will tend to appear between the lower part of the plate 1, 2 and the body. Fig. 2 illustrates such gaps G. To compensate for this effect (the gap G), it is common to construct the plate carrier in such a way to reduce these gaps G. This will result in even further pressure on the pressure points between the plates 1, 2 and the body.

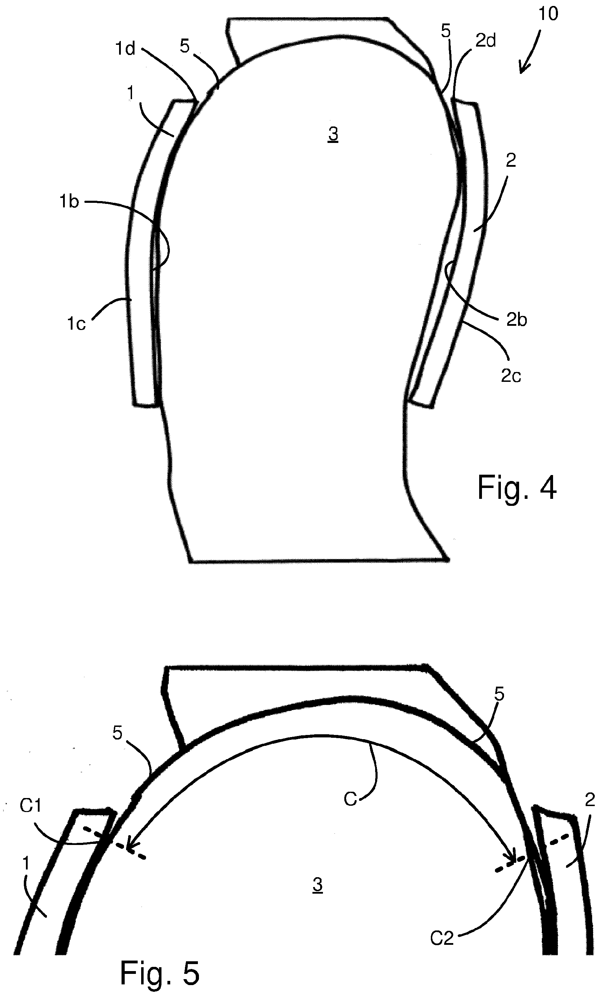

Reference is now made to Fig. 4, which depicts an embodiment according to the present invention. A person 3 is wearing an anti-ballistic plate assembly 10, with a front plate 1, a back plate 2, and a carrying strap 5. The front plate 1 has an inner face 1b and an outer face 1c. Correspondingly, the back plate 2 has an inner face 2b and an outer face 2c.

Contrary to the embodiment belonging to prior art and shown in Fig. 2, in the embodiment shown in Fig. 4 the carrying strap 5 is attached on the inner faces 1b, 2b of the front plate 1 and back plate 2, respectively. By attaching the carrying strap 5 in this position, the carrying strap 5 will follow the body (mainly the shoulder) of the person 3 along a greater distance. This is indicated in Fig. 5 with the curved arrow C.

Advantageously, the portion of the carrying strap 5 that is attached to the front plate 1 extends from the chest, about just below the collar bones, and upwards towards the shoulder. Furthermore, the portion of the carrying strap 5 that is attached to the back plate 2 extends from about the mid height of the scapula, and upwards towards the shoulder.

In Fig. 5, the curved arrow C extends between a front contact position C1 and a rear contact position C2. The contact positions C1, C2 are the positions where the contact between the carrying strap 5 and the body of the carrying person 3 starts. As shown in Fig. 4, the carrying strap 5 is in contact with the person substantially along the entire extension between the front and rear contact positions C1, C2.

As appears from Fig. 4, by attaching the carrying strap 5 at the inner face 1b, 2b of the plate 1, 2, the effect leading to the gaps G (cf. Fig. 2) is removed or at least reduced.

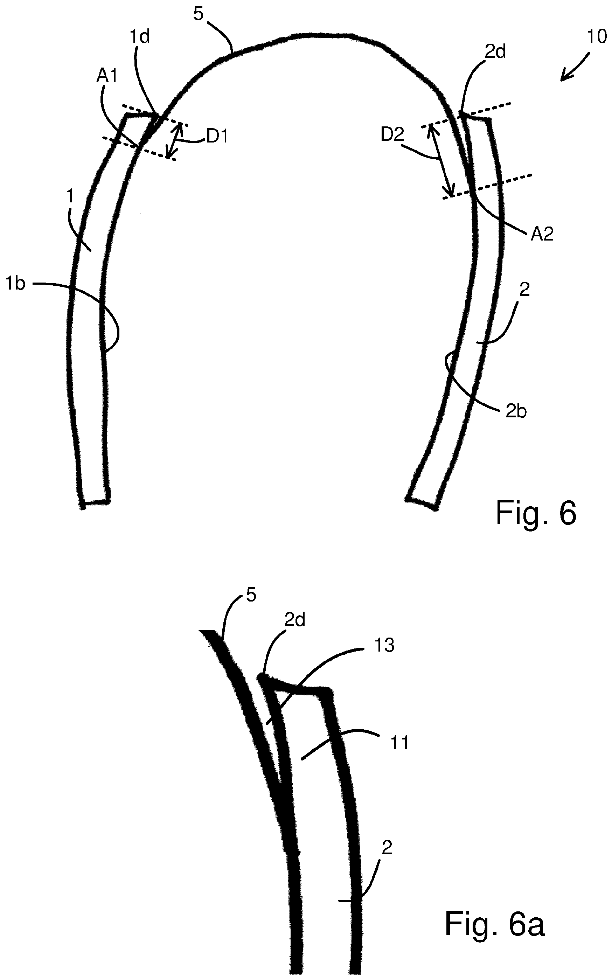

Fig. 6 depicts a side view of the anti-ballistic plate assembly 10 of Fig. 4, however without being mounted on a person. The front plate 1 has an upper and inner edge portion 1d. Correspondingly, the back plate 2 has an upper and inner edge portion 2d. As can be seen in Fig. 6, there is a clearance or gap between the upper and inner edge portions 1d, 2d, and the carrying strap 5. This is possible because there is some distance between the upper and inner edge portion 1d, 2d and the strap attachment point A1, A2.

On the front plate 1, there is a first vertical distance D1 between the upper and inner edge portion 1d and the strap attachment position A1. Correspondingly, on the back plate 2 there is a second vertical distance D2 between the upper and inner edge portion 2d and the strap attachment point A2.

Moreover, for the embodiment of the anti-ballistic plate assembly 10 shown in Fig. 6, the first vertical distance D1 of the front plate 1 is smaller than the second vertical distance D2 of the back plate 2.

Furthermore, in the shown embodiment, however also possible in other embodiments, the shape and size of the front plate 1 and the back plate 2 are identical. Consequently, when manufacturing the anti-ballistic plate assembly 10 according to the shown embodiment, one will need to produce only one type of anti-ballistic plate 1, 2. However, using different plates for the front plate 1 and the back plate 2 is possible.

Still referring to Fig. 6, it shall be noted that the strap attachment points A1, A2 relates to the upper edge or upper portion of an attachment area. As a skilled person will appreciate, to attach the carrying strap 5 to the plate 1, 2, there is advantageously an attachment strip or attachment area, and not merely a single attachment point. For instance, the attachment area may extend some centimeters downwards along the plate 1, 2 from the attachment point A1, A2.

Fig. 6a is an enlarged portion of Fig. 6, showing the upper part of the back plate 2. As illustrated with Fig. 6a, there is a free, upper end portion 11 of the back plate 2 which can form a gap 13 between the plate 2 and the carrying strap 5. The front plate 1 can have a corresponding gap 13 between the plate and the carrying strap 5.

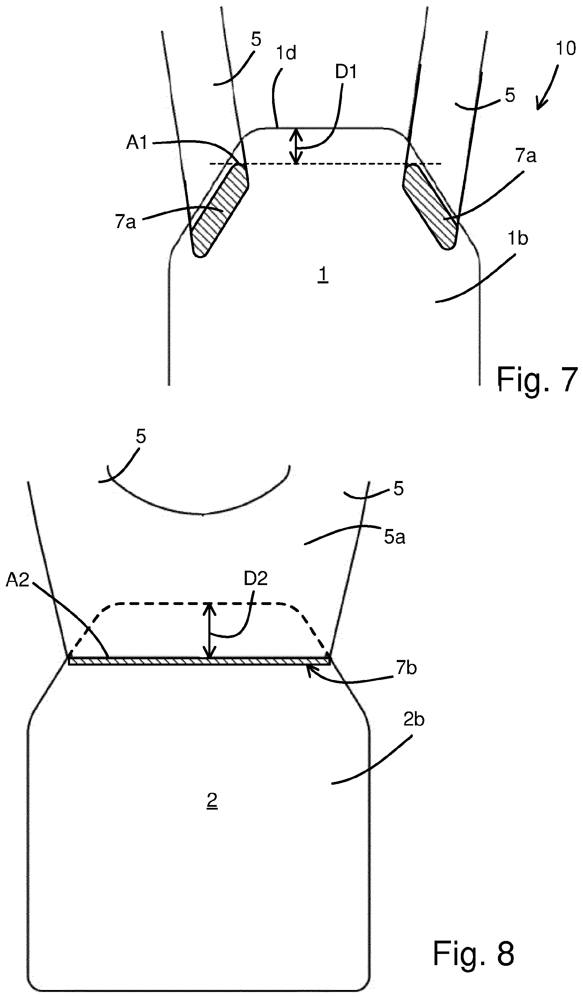

Fig. 7 is a rear view that schematically illustrates two attachment areas 7a for the front plate 1. Two carrying straps 5 are attached to the inner face 1b of front plate 1 at respective attachment areas 7a. The first vertical distance D1 between the attachment point A1, which is the upper portion of the attachment area 7a, and the upper and inner edge portion 1d is indicated with the double-pointed arrow.

A similar illustration can be made for the back plate 2 to illustrate the vertical distance D2 between the upper and inner edge portion 2d and the attachment point A2. Fig. 8 depicts the back face 2b of a back plate 2. In this embodiment, the two attachment straps 5 that extend downwards from the shoulder of the carrying person (not shown) are joined in a carrying sheet 5a, typically a fabric. The carrying sheet 5a is attached to the back plate 2 at the attachment area 7b. The uppermost location of the attachment area 7b is defined as the attachment point A2.

As appears from Fig. 7, the attachment area 7b of the back plate 2 is substantially formed as a horizontally extending attachment. As in the shown embodiment, the attachment area 7b can be parallel to the upper and inner edge portion 2d of the back plate 2.

Advantageously, for the shown or any other embodiment of the invention, the first vertical distance D1 for the front plate 1 is between 5 and 50 mm, more preferably between 20 and 35 mm, or between 25 and 30 mm.

Advantageously, for the shown or any other embodiment of the invention, the second vertical distance D2 for the back plate 2 is between 5 and 80 mm, more preferably between 40 and 70 mm, or between 55 and 60 mm. By having the attachment point A2 (or the attachment area 7a), where the carrying strap(s) are attached to the back plate 2, at the height of the natural bend of the back, the back plate 2 is better anatomically adjusted to the shape of the carrying person 3. This effect can be appreciated by comparing the prior art solution in Fig. 2 with the inventive solution shown in Fig. 4.

Typical dimensions of an anti-ballistic plate 1, 2 used with an anti-ballistic plate assembly 10 according to the invention can be 250 mm x 300 mm (width x height). However smaller and larger plates may also be used, for instance having widths between 200 and 300 mm, and heights between 250 and 350 mm.

Typically, the anti-ballistic plate 1, 2 can be a multi-curved plate.

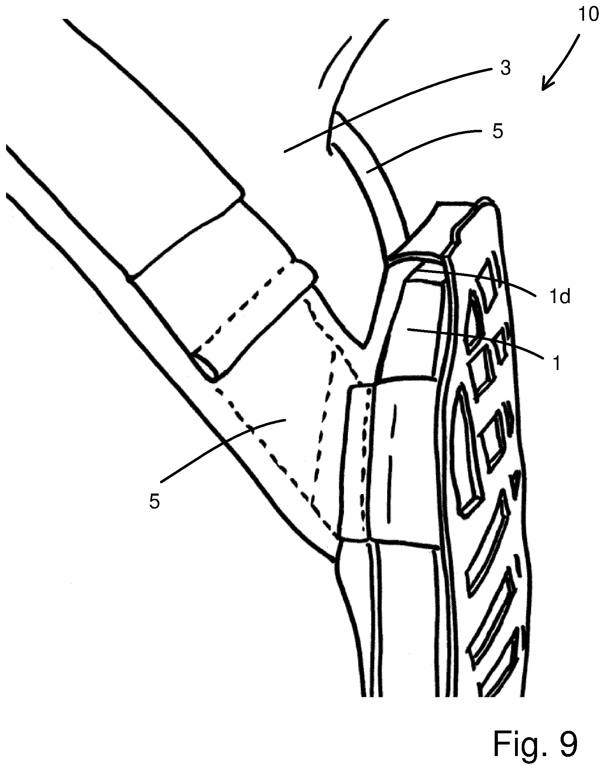

Fig. 9 shows an anti-ballistic plate assembly 10 in a more realistic embodiment. As can be seen in Fig. 9, the upper and inner edge 1d of the front plate 1 is arranged at some horizontal distance from the chest of the wearing person 3.

Fig. 10 is a perspective view of a worn anti-ballistic plate assembly 10.

## Claims

1. An anti-ballistic plate assembly (10) configured to be worn by a person (3), comprising
- an anti-ballistic front plate (1) configured to protect the front of a chest of the person (3) and having an inner face (1b) and an outer face (1c); and
- an anti-ballistic back plate (2) configured to protect the back of a person (3) and having an inner face (2b) and an outer face (2c);
and further comprising
- two carrying straps (5) configured to extend over a shoulder of the person (3), on respective side of the person's neck, wherein the carrying straps (5) are attached to the front plate (1) and the back plate (2), at respective attachment areas (7a, 7b), wherein the attachment areas (7a, 7b) are located at the respective inner face (1b, 2b);
wherein the anti-ballistic front plate (1) and the anti-ballistic back plate (2) each have an upper and inner edge portion (1d, 2d),
wherein the attachment area (7a, 7b) of the front plate (1) and the back plate (2), respectively, is arranged a respectively first and second vertical distance (D1, D2) below the respective upper and inner edge portion (1d, 2d), **characterized in that** the first vertical distance (D1) is smaller than the second vertical distance (D2).

2. An anti-ballistic plate assembly (10) according to claim 1, **characterized in that** the first vertical distance (D1) is between 5 and 50 mm, more preferably between 20 and 35 mm, or between 25 and 30 mm.

3. An anti-ballistic plate assembly (10) according to one of the preceding claims, **characterized in that** the second vertical distance (D2) is between 5 and 80 mm, more preferably between 40 and 70 mm, or between 55 and 60 mm.

4. An anti-ballistic plate assembly (10) according to one of the preceding claims, **characterized in that** the front plate (1) and/or the back plate (2) has a width between 200 and 300 mm, and a height between 250 and 350 mm.

## Patentansprüche

1. Antiballistische Plattenanordnung (10), die konfiguriert ist, um von einer Person (3) getragen zu werden, umfassend
- eine antiballistische Frontplatte (1), die konfiguriert ist, um die Vorderseite einer Brust der Person (3) zu schützen und eine Innenseite (1b) und eine Außenseite (1c) aufweisend; und
- eine antiballistische Rückplatte (2), die konfiguriert ist, um den Rücken einer Person (3) zu schützen und eine Innenseite (2b) und eine Außenseite (2c) aufweisend;
und ferner umfassend
- zwei Tragegurte (5), die konfiguriert sind, um sich über eine Schulter der Person (3), auf der jeweiligen Seite des Halses der Person zu erstrecken, wobei die Tragegurte (5) an der Vorderplatte (1) und der Rückplatte (2) an jeweiligen Anbringungsbereichen (7a, 7b) angebracht sind, wobei sich die Anbringungsbereiche (7a, 7b) an der jeweiligen Innenseite (1b, 2b) befinden;
wobei die antiballistische Frontplatte (1) und die antiballistische Rückplatte (2) jeweils einen oberen und inneren Randabschnitt (1d, 2d) aufweisen,
wobei der Anbringungsbereich (7a, 7b) der Frontplatte (1) beziehungsweise der Rückplatte (2) einen ersten beziehungsweise zweiten vertikalen Abstand (D1, D2) unterhalb des jeweiligen oberen beziehungsweise inneren Randabschnitts (1d, 2d) angeordnet ist, **dadurch gekennzeichnet, dass** der erste vertikale Abstand (D1) kleiner ist als der zweite vertikale Abstand (D2).

2. Antiballistische Plattenanordnung (10) nach Anspruch 1,
**dadurch gekennzeichnet, dass** der erste vertikale Abstand (D1) zwischen 5 und 50 mm, mehr bevorzugt zwischen 20 und 35 mm, oder zwischen 25 und 30 mm ist.

3. Antiballistische Plattenanordnung (10) nach einem der vorstehenden Ansprüche, **dadurch gekennzeichnet, dass** der zweite vertikale Abstand (D2) zwischen 5 und 80 mm, mehr bevorzugt zwischen 40 und 70 mm, oder zwischen 55 und 60 mm ist.

4. Antiballistische Plattenanordnung (10) nach einem der vorstehenden Ansprüche, **dadurch gekennzeichnet, dass** die Frontplatte (1) und/oder die Rückplatte (2) eine Breite zwischen 200 und 300 mm und eine Höhe zwischen 250 und 350 mm aufweist.

## Revendications

1. Ensemble de plaques anti-balistiques (10) conçu pour être porté par une personne (3), comprenant
- une plaque frontale anti-balistique (1) conçue pour protéger l'avant d'une poitrine de la personne (3) et ayant une face intérieure (1b) et une face extérieure (1c) ; et
- une plaque dorsale antibalistique (2) conçue pour protéger le dos d'une personne (3) et ayant une face intérieure (2b) et une face extérieure (2c) ;
et comprenant en outre
- deux sangles de transport (5) conçues pour s'étendre sur une épaule de la personne (3), de chaque côté du cou de la personne, dans lequel les sangles de transport (5) sont attachées à la plaque avant (1) et à la plaque arrière (2), au niveau des zones d'attache respectives (7a, 7b), dans lequel les zones d'attache (7a, 7b) sont situées sur les faces intérieures respectives (1b, 2b) ;
dans lequel la plaque avant anti-balistique (1) et la plaque arrière antibalistique (2) ont chacune une partie de bord supérieure et intérieure (1d, 2d),
dans lequel la zone de fixation (7a, 7b) de la plaque avant (1) et de la plaque arrière (2), respectivement, est disposée à une première et une seconde distance verticale (D1, D2) au-dessous de la partie supérieure et intérieure du bord (1d, 2d), **caractérisée en ce que** la première distance verticale (D1) est plus petite que la seconde distance verticale (D2).

2. Ensemble de plaques anti-balistiques (10) selon la revendication 1, **caractérisé en ce que** la première distance verticale (D1) est comprise entre 5 et 50 mm, plus préférablement entre 20 et 35 mm, ou entre 25 et 30 mm.

3. Ensemble de plaques anti-balistiques (10) selon l'une quelconque des revendications précédentes, **caractérisé en ce que** la seconde distance verticale (D2) est comprise entre 5 et 80 mm, plus préférablement entre 40 et 70 mm, ou entre 55 et 60 mm.

4. Ensemble de plaques anti-balistiques (10) selon l'une quelconque des revendications précédentes, **caractérisé en ce que** la plaque avant (1) et/ou la plaque arrière (2) a une largeur comprise entre 200 et 300 mm, et une hauteur comprise entre 250 et 350 mm.
